# EUROPEAN PATENT SPECIFICATION

(11) **EP 3 032 991 B1**
(45) Date of publication and mention of the grant of the patent: **04.03.2020**
(21) Application number: 14747022.3
(22) Date of filing: 01.08.2014
(51) Int. Cl.: A47J 31/40

(54) **COFFEE MACHINE FOR PROVIDING COFFEE BREW WITH REDUCED CAFFEINE CONTENT**
KAFFEEMASCHINE ZUR BEREITSTELLUNG EINES AUFGUSSES MIT REDUZIERTER KOFFEINGEHALT
MACHINE À CAFÉ POUR FOURNIR UNE INFUSION DE CAFÉ À FAIBLE TENEUR EN CAFÉINE

(30) Priority: 13.08.2013 EP 13180232
(43) Date of publication of application: 22.06.2016
(73) Proprietor: Koninklijke Philips N.V., 5656 AE Eindhoven (NL)
(72) Inventor: PIKKEMAAT, Jeroen Alphons, 5656 AE Eindhoven (NL); ZEIJLSTRA, Harmina Christina, 5656 AE Eindhoven (NL); BRANTJES, Constantijn Wilhelmus Maria, 5656 AE Eindhoven (NL); MEERBEEK, Berent Willem, 5656 AE Eindhoven (NL); SUIJVER, Jan Frederik, 5656 AE Eindhoven (NL); WILLARD, Nicolaas Petrus, 5656 AE Eindhoven (NL); CASTELLANI, Andrea, 5656 AE Eindhoven (NL); VAN DEN AKER, Karel Johannes Adrianus, 5656 AE Eindhoven (NL); HAEX, Nicole Petronella Martien, 5656 AE Eindhoven (NL); TE VELDE, Mart Kornelis-Jan, 5656AE Eindhoven (NL); MARRA, Johan, 5656 AE Eindhoven (NL); WONDERGEM, Hendrikus Jan, 5656 AE Eindhoven (NL)
(74) Representative: Philips Intellectual Property & Standards
(86) International application number: PCT/EP2014/066633
(87) International publication number: WO 2015/022209

(56) References cited:
- EP-A2- 0 472 272
- EP-A2- 0 472 272
- EP-A2- 0 553 955
- WO-A1-97/07686
- WO-A1-97/07686
- WO-A1-2011/157759
- US-A- 4 331 694
- US-A1- 2011 183 048
- US-B1- 6 182 555

## Description

### FIELD OF THE INVENTION

The present invention relates to a coffee machine, in particular to a coffee machine architecture for providing coffee brew with a reduced caffeine content. This invention also relates to a method for providing coffee brew with reduced caffeine content.

### BACKGROUND OF THE INVENTION

Coffee is one of the most popular beverages in the world. It is well known, that coffee can have stimulating effects on humans because of its caffeine content. However, caffeine is not always desirable, for example before going to sleep or for medical reasons.

Decaffeinated coffee is produced on an industrial scale. The coffee seeds or beans are typically decaffeinated in industrial processes when they are still green.

Decaffeinated coffee is commercially available, just like regular coffee, in the form of roasted beans or coffee grind and can be handled just like regular coffee for providing coffee brew with reduced caffeine content.

A disadvantage of decaffeinated coffee beans or grinds is that it has to be kept in stock in addition to regular coffee beans or grind, if both regular coffee and decaffeinated coffee brew are desired. Unfortunately, the quality of coffee suffers from aging effects once a package has been opened. In many cases, the demand for decaffeinated coffee is lower than the demand for regular coffee. Thus, if the throughput of decaffeinated coffee is low, only decaffeinated coffee brew of reduced intensity and aroma may be available.

WO 97/07686 discloses a filter having chambers comprising bentonite clay for the decaffeination of brewed coffee. Freshly brewed coffee brew that has been prepared using regular coffee beans or grind, is passed through the filter after completion of the brewing process. The bentonite clay in the filter adsorbs caffeine in the coffee brew and thereby reduces the caffeine content. The filter also retains and prevents the bentonite clay from entering into the coffee brew.

WO 2011/157759 A1 discloses an example of a bevarage dispenser with improved powder dosing system.

US 6,182,555 B1 discloses a brewing machine comprising a brewer for brewing coffee or tea, preferably in condensed form. Subsequently, the brewed coffee or tea can be mixed with hot or cool water and/or flavorings as additives. Preferably the mixing occurs in a user's cup. Brewed coffee and additives are delivered independently.

EP 0 553 955A2 discloses an apparatus for automatically brewing a beverage including having a brew chamber assembly having an inlet, a beverage dispensing outlet and a drain outlet; a spool operatively positioned in said brew chamber movable between loading, brewing, and flushing positions; a drive apparatus operatively associated with said spool for axially shifting said spool between said positions; a filter assembly disposed in said brew chamber for separating a brewing substance from a brewed beverage produced therefrom; a device operatively associated with said brew chamber for depositing a quantity of a brewing substance into said brew chamber; a water distribution system controllably communicating with said brew chamber for controllably dispensing heated water into said brew chamber and a controller coupled to said water distribution system and said valve means for controlling said water distribution system and said valve means to introduce a flow of water into said brew chamber when said dispensing and drain outlets are closed and then stopping said flow and holding the water in said brew chamber during a predetermined steep time, said controller then causing additional water to flow into said brew chamber while opening said dispensing outlet and dispensing a brewed beverage therefrom.

### SUMMARY OF THE INVENTION

It is an object of the present invention to overcome the aforementioned problems. It is a further object to provide a coffee machine for providing coffee brew with reduced caffeine content, wherein the quality of the coffee is improved. It is a further object that the coffee brew with reduced caffeine content can be provided based on regular coffee beans or grind.

In a first aspect of the present invention a coffee machine configured for providing coffee brew with reduced caffeine content is presented that comprises
- a mixer configured for mixing coffee grind and a caffeine-reducing additive, the mixer having a coffee inlet for receiving the coffee grind, an additive inlet for receiving the caffeine-reducing additive, and a mixer outlet for providing a mixture of coffee grind and additive,
- a brewing unit configured for brewing the mixture of coffee grind and additive, the brewing unit having a brewing unit inlet and a brewing unit outlet for providing coffee brew, wherein the brewing unit inlet of the brewing unit is connected to the mixer outlet of the mixer for receiving the mixture of coffee grind and additive, and
- a grinder configured for grinding coffee beans and/or the additive, wherein the grinder is further configured as the mixer for mixing coffee grind and additive.

In a further aspect of the present invention a method for providing coffee brew with reduced caffeine content is presented that comprises steps of
- mixing coffee grind and a caffeine-reducing additive in a mixer of a coffee machine, and
- brewing the mixture of coffee grind and caffeine-reducing additive.

Preferred embodiments of the invention are defined in the depended claims.

The present invention achieves the aforementioned objects by providing a coffee machine arranged to mix coffee grind and a caffeine-reducing additive prior to brewing. The inventors have found that selective caffeine reduction can be effectively achieved when the caffeine-reducing additive, in particular as a small-particulate adsorbent, is already present in the coffee grind before brewing. Furthermore, the coffee grind effectively retains the additive. Experiments have shown that the amount of the additive in the coffee brew after the brewing process is very low. Thus, there is no need for a post-filtering process during which the coffee would be aging and cooling down as it happens according to WO 97/07686. Moreover, the coffee brew can be directly provided at an outlet of the brewing unit such that the crema layer, as an essential sensual sensory attribute of espresso coffee, is maintained also for coffee brew with reduced caffeine content. In particular when applied to espresso coffee, the physical contact with the filter after completion of the brewing process according to WO 97/07686 will destroy the crema layer.

An advantage compared to commercially available pre-decaffeinated coffee is that the desired coffee type can be selected from the larger variety of regular coffees and not from the limited selection of pre-decaffeinated coffees.

Furthermore, since the claimed coffee machine features a mixer for mixing the coffee grind and the caffeine-reducing additive, the mixing ratio, e.g. the amount of caffeine-reducing additive with respect to the amount of coffee grind, can be selected according to a desired degree of caffeine reduction. In other words, the coffee machine according to an aspect of the present invention enables the user to select any desired caffeine content in the range from regular coffee brew to substantially decaffeinated coffee brew. In other words, also coffee brew can be provided wherein the caffeine content is reduced by, for example, 20%, 50% or any other percentage desired by the user. An exemplary option could be a full decaf coffee with about 99% caffeine removal. A further exemplary option could be an evening espresso after dinner having a reduced caffeine content of 50%.

A further advantage of the coffee machine according to an aspect of the present invention is that regular, e.g. non-decaffeinated, coffee is used for providing both regular coffee brew as well as coffee brew with reduced caffeine content. In particular in scenarios where the throughput of decaffeinated coffee is low, this is a particular advantage since the high throughput regular coffee ensures a delicious fresh taste and improved aroma.

The actual brewing procedure can be identical or similar to that of regular coffee. In general, hot water is provided to the mixture of coffee grind and additive in the brewing unit. It should be noted that coffee can be brewed in several different ways and that the brewing procedure is not limited to one particular type. Exemplary brewing procedures include decoction, infusion, and percolation. A preferred option is pressurized percolation for providing espresso coffee.

In the case that the caffeine-reducing additive is provided in the form of particles, entering of additive particles into the coffee brew provided at the brewing unit outlet is efficaciously reduced to very low levels by the inherent filtering effect of the wetted coffee bed. Coffee bed in this context refers to the mixture of coffee grind and additive residing in the brewing unit.

In a preferred embodiment the caffeine-reducing additive is a caffeine adsorbent, in particular an alumino-silicate, a smectite alumino silicate, or bentonite. The alumino-silicate adsorbents used for decaffeination preferably have divalent ions such as Ca²⁺ or Mg²⁺ ions as their counterions. The use of such additives is advantageous because the pH of the coffee brew should not be notably affected following its contact with the additive, since this would also affect the taste of the coffee brew. Thus, advantageously, the caffeine-reducing additive is configured not only for reducing the caffeine content of the coffee brew but also for preserving the taste of the coffee brew as much as possible. Experiments have shown that the taste preservation can be improved with respect to pre-decaffeinated coffee. Because of the chemical treatment that the decaffeinated coffee beans have gone through, there exist differences in taste between regular coffee and industrial pre-decaffeinated coffee even when the beans are of the same species and have the same origin. Thus, in an embodiment, the coffee machine claimed herein can maintain a unique flavor of a particular type of coffee. This is also possible if the caffeine content has only been reduced to a desired percentage. Alternative caffeine-reducing additives include, but are not limited to, other types of clay minerals such as montmorillonite, beidellite, nontronite, saponite, hectorite, vermiculite, and illite, zeolites, sepiolite activated charcoal, activated alumina or activated silica. Further alternatives include amberlite XAD4 and amberlite XAD761. The mixing ratio of caffeine-reducing additive and coffee grind ranges between 0.01 and 1, preferably between 0.01 and 0.5, wherein the mixing ratio defines a ratio of the weight of the additive and the weight of the coffee.

The coffee machine comprises a grinder for grinding coffee beans and/or the additive. The grinder for grinding coffee beans has a coffee inlet for receiving coffee beans and a coffee outlet for providing coffee grind, wherein the coffee outlet of the grinder is connected to the coffee inlet of the mixer. The grinder for grinding the additive has an additive inlet for receiving the additive, in particular in solid form, and an additive outlet for providing additive grind, wherein the additive outlet of the grinder is connected to the additive inlet of the mixer. Grinders for grinding coffee beans are already known from existing high-end automatic coffee machines. An advantage of using a grinder is that coffee can be stored in the coffee machine in the form of beans. The beans are broken up and provided as coffee grind right before the brewing process. Thereby, the coffee beans release their full flavor and aroma. Thus, aging effects of coffee that is stored in the coffee machine are reduced. Correspondingly, a grinder for the additive has the effect that the particle size of the additive is reduced by the grinding process increasing the surface area of the additive available for absorption of the caffeine.

The grinder is configured as the mixer for mixing coffee grind and additive. Thus, the mixing of coffee grind and caffeine-reducing additive can be effectively achieved using the grinder, in particular a grinder that is already present in automatic coffee machines for grinding coffee beans. Types of grinders include, but are not limited to burr grinders, millers or blade grinders. An advantage of this refinement is that one single grinder or even an already existing grinder can be used such that no additional separate mixer is required.

In a further embodiment the grinder is arranged to reduce the grinding cycletime with increasing content of additive in the mixture. It was found that adding additives such as bentonite changes the efficiency of the grinder. The bentonite makes the half grinded coffee bean particles less sticky which increases or rather improves the throughput of beans. Without any adjustments more coffee grind will be transported to the brewing chamber and a stronger coffee brew will be obtained. When a user selects a product with reduced caffeine content the grinding time pers coffee serving is reduced with a least 5%, preferably at least 10%.

In an embodiment, the coffee machine is further configured to receive the caffeine-reducing additive in the form of one of powder, flakes, slurry, grains, pellets and a solid bar. Advantageously, the form of the additive is adapted for the desired type of mixer. For example, the additive can be provided in the form of flakes, grains or pellets, in particular pellets having the size and shape of coffee beans, if the grinder is configured as the mixer for mixing coffee grind and additive. A solid bar is particularly advantageous if the grinder is a miller that gradually mills down the solid bar and also mixes the additive with the coffee grind. In the absence of a grinder, already providing the additive in the form of powder is a preferred option. Alternatively, the additive in the form of powder can be mixed with the coffee grind located downstream from a grinder for grinding coffee beans only.

An advantage of a solid bar, wherein the additive is compressed in the form of a bar, is its compactness. An advantage of using powder is that the additive can already be provided with a desired particle size and does not mandatorily require preparation before being mixed with the coffee grind. Further alternatives include providing the additive in the form of a liquid, slurry or paste.

In a further embodiment, the additive comprises particles of less than 100µm diameter, in particular less than 10 µm diameter. The diameter can refer to a volume weighted mean. An advantage of using small particles is to provide a large effective surface for caffeine reduction.

In an embodiment, the coffee machine further comprises an additive container for providing the caffeine-reducing additive at an additive outlet, wherein the additive outlet of the additive container is connected to the additive inlet of the mixer. Correspondingly, in an embodiment the coffee machine further comprises a coffee container for providing the coffee at a coffee outlet, wherein the coffee outlet of the coffee container is connected to the coffee inlet of the mixer. For a coffee machine further comprising a grinder, the coffee outlet of the coffee container can be connected to the coffee inlet of the grinder instead of the coffee inlet of the mixer. Correspondingly, the additive outlet of the additive container can be connected to the additive inlet of the grinder instead of being directly connected to the additive inlet of the mixer. The container can be configured to prevent moisture from entering the container.

In an alternative embodiment, the coffee machine is further configured to receive an additive container for providing the caffeine-reducing additive at an additive outlet, wherein the additive inlet of the mixer is connectable to the additive outlet of the additive container. Advantageously, the additive container is a replaceable cartridge. Also in this case, the additive outlet of the additive container can be connected to the additive inlet of a grinder instead of the additive inlet of the mixer. An advantage of this embodiment is the simplified handling of the additive. Instead of handling the additive in the form of, for example, powder or grains, the user can simply replace the replaceable cartridge that contains the additive. The replacement of the cartridge can be thought of similar to the replacement of a water filter. The replacement of a filter is an action that users of coffee machines are already familiar with.

In a further embodiment, the coffee machine further comprises additive supply means for supplying the additive at the additive inlet of the mixer. In other words, the additive has to be transported from the additive container to the additive inlet of the mixer. For example, the additive container can be arranged at or above the mixer wherein the additive supply means can be a connection such as a pipe or hole from the container to the mixer. Alternatively, the additive supply means comprises a transportation means such as a spindle or conveyor belt. Alternatively, the supply means also includes a pump, which is particularly advantageous for the case if the additive is provided in the form of a liquid or could also be used for additive in the form of powder. It is to be noted, that the additive supply means can also support the mixing of coffee grind and caffeine reducing additive in that the additive is provided to the coffee grind with momentum. For example, additive in the form of powder could be sprayed into a stream of coffee grind falling out of a coffee container or a coffee grinder on its path to the brewing unit.

In a further embodiment, the additive inlet of the mixer is arranged below the coffee grind inlet of the mixer. For example, the additive inlet can be arranged such that the coffee grind entering the mixer mixes in passing with the additive. For example, the coffee grind enters the mixer by gravity and passes by the additive inlet and thereby mixes in that the additive is added to the stream of coffee grind while falling. An advantage of this embodiment is that no further transportation means are required and that the mixing is effected by combining the stream of the coffee grind and a stream of the additive. This works particularly well for the combination of coffee grind and additive in the form of powder.

In an embodiment the coffee machine further comprises a coffee dosing unit and/or an additive dosing unit. The function of a dosing unit is that the correct amount of coffee and/or additive is provided. Examples of dosing units include but are not limited to a flap or shutter, wherein the opening time and/or aperture substantially determine the amount, a spindle, wherein the transportation capacity defines the amount, and a spring or a hook mechanism wherein individual portions of the additive are provided. A spring or a hook mechanism is particularly advantageous in the case when the additive is available in the form of pellets, wherein individual pellets are provided to a grinder configured as the mixer for producing a portion of the coffee brew with reduced caffeine content. Of course the previously mentioned supply means can be adapted to act as the dosing unit for coffee and/or additive.

In a further embodiment, the mixer is configured to provide a mixture of coffee grind and additive having a variable mixing ratio of coffee grind and additive. Thereby, it is possible to provide coffee brew with reduced caffeine content wherein the level of caffeine reduction can be selected according to user preferences. In an embodiment, the coffee dosing unit and/or the additive dosing unit are part of the mixer. Besides controlling the overall amounts and the ratio of coffee grind and additive, it is also possible to provide a variable mixture of coffee grind and additive to the brewing unit. For example, the amount of additive provided to the brewing unit gradually increases. Thereby, the mixture of coffee grind and additive received by the brewing unit features are concentration gradient.

In further refinement, a concentration of the additive in the mixture of coffee grind and additive increases towards the brewing unit outlet. The inventors have found, that any additive present in an upstream part of the coffee puck, wherein coffee puck refers to the portion of coffee grind that is provided to the brewing unit for brewing a portion of coffee brew, is less effective in caffeine reduction as compared to the same amount of additive present in the downstream part of the coffee puck, since it is in contact with a smaller fraction of the total caffeine present. An advantage of this embodiment is that a more efficient caffeine reduction can be achieved. Thus, a lower overall amount of additive is required, compared to the situation wherein a homogeneous distribution of the additive is present throughout the coffee puck, to achieve a desired reduction of caffeine. Alternatively, an amount of additive that is situated in the downstream part of the coffee puck can further reduce the caffeine content compared to the situation wherein a homogeneous distribution of the same amount of additive is present throughout the coffee puck. For example, more than half of the total amount of additive can be present in the bottom downstream half of the coffee puck, or - even more extreme - in the bottom quarter of the coffee puck. This type of distribution enables a more efficient caffeine reduction with the same overall amount of additive.

In a further refinement, the caffeine content is controlled by a distribution of coffee grind and additive in the coffee puck. For example, the additive is provided in the form of pellets. Each pellet contains a defined amount of the additive. For a homogeneous mixture of coffee grind and additive, a certain reduction of caffeine content in the coffee brew can be achieved. If the concentration of the additive in the downstream direction of the coffee puck is increased, the caffeine reduction is more effective, and the caffeine content in the coffee brew can be further reduced. Alternatively, if the concentration of the additive in the upstream direction is increased, the caffeine reduction is less effective, and the caffeine content in the coffee brew is increased compared to the reduction of caffeine content using a homogeneous mixture of coffee grind and additive.

In a further embodiment, the coffee machine is further configured to adapt a brewing time depending on the amount of additive. Since the overall mass of the combination of coffee grind and additive is increased, the brewing time can be increased to account for this increased mass. With respect to having a variable mixing ratio of coffee grind and additive, it is to be noted, that the extraction time depends on the additive concentration in the downstream part mainly. Therefore, the additive concentration in this region should not become too high.

In a further embodiment, the coffee machine further comprises an interceptor connected to the brewing unit outlet for discarding an initial part of the coffee brew. In other words, the interceptor prevents an initial part of the coffee brew from being provided to the user. The inventors have found that the initial part of the coffee brew contains a relatively high caffeine content. An advantage of this embodiment is that the caffeine content can be further reduced. Furthermore, the amount of additive entering the coffee brew can be further reduced by draining the initial part of the coffee brew into a waste container.

### BRIEF DESCRIPTION OF THE DRAWINGS

These and other aspects of the invention will be apparent from and elucidated with reference to the embodiments described hereinafter. In the following drawings
Fig. 1 shows a block diagram of an exemplary embodiment of an architecture of a coffee machine according to an aspect of the present invention;
Fig. 2A shows a perspective sketch of a coffee machine and a corresponding replaceable cartridge for the caffeine-reducing additive;
Fig. 2B shows an embodiment of a replaceable cartridge;
Fig. 2C shows an example of a control panel of a coffee machine;
Fig. 3 shows a first embodiment of a grinder adapted as a mixer;
Fig. 4 shows a second embodiment of a grinder adapted as a mixer;
Fig. 5 shows a further embodiment of a grinder adapted as a mixer;
Fig. 6 shows an example of a dosing unit;
Fig. 7 shows a further embodiment of a mixer with grinder, dosing unit and container;
Fig. 8 shows a further embodiment of a mixer;
Fig. 9 shows a further embodiment of a mixer;
Figs. 10A and 10B show an embodiment of a dosing unit;
Fig. 11 shows an embodiment of a coffee machine with dosing unit;
Fig. 12 shows a further embodiment of a mixer;
Fig. 13 shows a further embodiment of a mixer;
Figs. 14A and 14B show an example of a coffee puck having a variable mixing ratio of coffee grind and additive;
Figs. 15A and 15B show an example of a coffee pad having a variable mixing ratio of coffee grind and additive;
Figs. 16A and 16B show an example of a coffee capsule having a variable mixing ratio of coffee grind and additive;
Fig. 17 shows a graph of a level of caffeine reduction versus amount of bentonite; and
Fig. 18 shows an exemplary graph of a spectrogram comparing regular coffee brew and coffee brew with reduced caffeine content prepared with a coffee machine according to an aspect of the present invention.

### DETAILED DESCRIPTION OF EMBODIMENTS

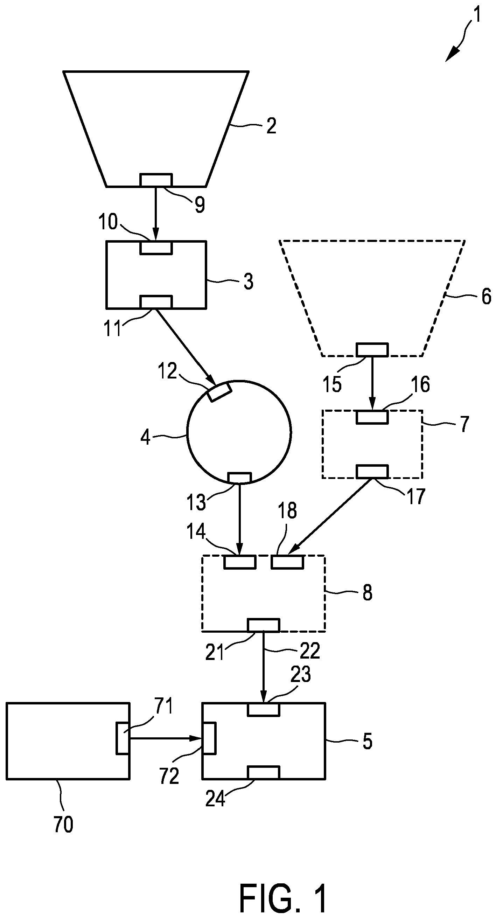

Fig. 1 shows a block diagram of an exemplary embodiment of an architecture of a coffee machine 1 for providing coffee brew with reduced caffeine content according to an aspect of the present invention. Building blocks that can be found in a conventional coffee machine are identified by a solid outline, whereas building blocks that represent new machine functions dedicated to caffeine reduction are identified by a dashed outline.

An exemplary conventional coffee machine comprises a coffee container 2 for coffee beans, a coffee dosing unit 3, a grinder 4, a brewing unit 5 and a water supply 70. The particular embodiment of the coffee machine 1 shown in this example further comprises elements dedicated to caffeine reduction, e.g. an additive container 6 for the additive, an additive dosing unit 7 and a mixing unit 8 for a mixing coffee grind and caffeine-reducing additive.

In an alternative embodiment, the coffee container 2 can already comprise the coffee dosing unit 3. Correspondingly, the additive container 6 can also comprise the additive dosing unit 7. Alternatively, the grinder 4 comprises the coffee dosing unit 3. Further alternatively, the coffee dosing unit 3 is arranged between the grinder 4 and the mixer 8. Further alternatively, the mixer 8 comprises the coffee dosing unit 3.

The coffee dosing unit 3 can be a coffee bean dosing unit when it is positioned upstream from the grinder, and can alternatively be a coffee grind dosing unit when it is positioned downstream from the grinder. When the dosing unit 3 is comprised in the grinder, it can be either a coffee bean or a coffee grind dosing unit.

In a further modification of this embodiment, the coffee container 2 is configured to provide coffee grind instead of coffee beans and therefore the grinder 4 can be omitted. However, in a further embodiment, a grinder for grinding the additive can be arranged between the additive dosing unit 7 and the mixer 8 or alternatively between the additive container 6 and the additive dosing unit 7. Furthermore, if the additive is provided, for example, in the form of grains, flakes or pellets or as a solid bar, a grinder is required in the branch for additives. However, the additive can also be provided in the form of powder such that no grinder is required in the additive branch, as shown in the block diagram in Fig. 1.

In a further embodiment, the additive container 6 is not an integral part of the coffee machine 1, but for example, a replaceable cartridge. Optionally, the replaceable cartridge comprises the additive dosing unit 7. Correspondingly, the container for coffee, for example containing coffee grind, can also be a replaceable element that is not an integral part of the coffee machine 1. Thus, according to an aspect of the present invention, the coffee machine 1 for providing coffee brew with reduced caffeine content only comprises the mixer 8 for mixing coffee grind and caffeine-reducing additive and the brewing unit 5 for brewing the mixture of coffee grind and additive. In other words, the additional components are needed for providing coffee brew with reduced caffeine content; however, they do not have to be an integral part of the coffee machine 1.

Referring back to the coffee machine 1 as shown in the block diagram of Fig. 1, the coffee container 2 comprises a coffee outlet 9 that is connected to a coffee inlet 10 of the coffee dosing unit 3 for providing coffee beans to the coffee dosing unit 3. The coffee dosing unit 3 comprises a coffee outlet 11 that is connected to a coffee inlet 12 of the grinder 4. The coffee outlet 11 of the dosing unit can be for example a mechanical or electromechanical shutter for dosing the amount of coffee beans provided to the grinder 4 by controlling an aperture and/or opening time of the coffee outlet 11 of the coffee dosing unit 3. As an alternative, the coffee dosing unit 3 can be omitted and the dosing of the coffee is effected by an operating time of the grinder 4. Thus, the amount of coffee grind that is provided at a coffee outlet 13 of the grinder 4 is determined by how long the grinder is operating. Furthermore, the grinder 4 can be adjusted for a desired coarseness of the coffee grind. This further impacts the amount of coffee provided at the coffee outlet 13 of the grinder 4. If a component is omitted, the connections are adapted accordingly. For example, if the coffee dosing unit 3 is not implemented as a dedicated component, the coffee outlet 9 of the coffee container 2 can be directly connected to the coffee inlet 12 of the grinder 4. The grinder 4 further comprises a coffee outlet 13 that is connected to a coffee inlet 14 of the mixer 8 for providing coffee grind to the mixer 8.

In the additive branch of the coffee machine 1, the additive container 6 comprises an additive outlet 15 that is connected to an additive inlet 16 of the dosing unit 7. The dosing unit 7 comprises an additive outlet 17 that is connected to an additive inlet 18 of the mixer 8. Thus, the mixer 8 for mixing coffee grind 19 and caffeine-reducing additive 20 comprises a coffee inlet 14 for receiving the coffee grind 19 and an additive inlet 18 for receiving the caffeine-reducing additive 20 and a mixer outlet 21 for providing a mixture 22 of coffee grind and additive to the brewing unit 5. The brewing unit for brewing the mixture 22 of coffee grind and additive comprises a brewing unit inlet 23 and a brewing outlet 24 for providing coffee brew. The brewing unit inlet 23 of the brewing unit 5 is connected to the mixer outlet 21 of the mixer 8 for receiving the mixture 22 of coffee grind and additive.

The coffee machine 1 further comprises a water supply 70 for providing hot water and/or steam at a water outlet 71. The water outlet 71 is connected to a water inlet 72 of the brewing unit 5 for receiving the hot water and/or steam for the brewing procedure. A water supply as such is known. An exemplary water supply comprises a water container, a pump and a heater.

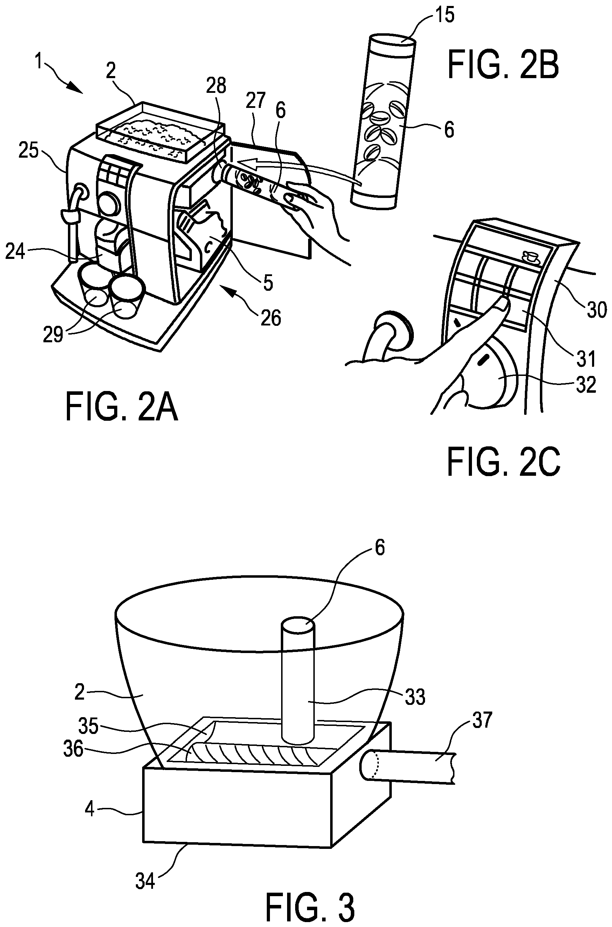

Fig. 2A shows a perspective sketch of a coffee machine 1 according to an aspect of the present invention. The coffee machine 1 comprises a coffee container 2 for coffee beans arranged on top of the coffee machine 1. In this embodiment the coffee machine 1 is further configured to receive an additive container 6 at a side 26 of the coffee machine 1. Alternatively, the additive container can be provided at different locations, for example from the top. The additive container 6 comprises an additive outlet 15 for providing the caffeine-reducing additive. In this particular, non-limiting embodiment, the additive container 6 has a substantially cylindrical shape and contains an amount of caffeine-reducing additive suitable for preparing thirty cups of coffee brew with reduced caffeine content. Of course, other shapes and decaffeination capacities are possible. Preferably sufficient caffeine-reducing additive for more than one cup is provided. The coffee container can contain the caffeine-reducing additive in any suitable form, for example in the form of powder, grains, flakes, pellets or as a solid bar. The additive container 6 is a replaceable cartridge as shown in Fig. 2B.

Referring back to Fig. 1A, a body 25 of the coffee machine 1 can be opened at the side 26 by opening a door 27 to provide axis to the brewing unit 5. The coffee machine 1 in this example further comprises an opening 28 configured for receiving the additive container 6 in the form of a replaceable cartridge.

In operation, the coffee brew is provided at a brewing unit outlet 24, for example an outlet that provides the coffee brew to cups 29, placed underneath the outlet 24. The brewing unit outlet 24 is connected to the brewing unit 5 by a pipe or hose.

An advantage of the coffee machine 1 according to an aspect of the present invention is that both regular coffee brew with regular caffeine content as well as coffee brew with reduced caffeine content can be provided from the same regular, non-decaffeinated coffee beans in the coffee container 2.

Fig. 2C shows a close-up of a control panel 30 of the coffee machine 1. The user can select that he wants a coffee brew with reduced caffeine content, for example by simply pressing a button 31. This selection causes the machine to add caffeine-reducing additive to the coffee grind with the mixer. Besides that, in terms of preferred settings and the brewing process in general, no changes are required. In particular, the user does not have to place a caffeine-adsorbent filter in the brewing unit 5, which would be inconvenient and impair the ease of use. In an alternative embodiment, the degree of caffeine reduction can be selected, for example, using a dial 32. Also after brewing, the handling for the user does not change compared to a conventional coffee machine. Also for the case of a coffee brew with reduced caffeine content, the mixture of coffee grinds and additive, i.e., the coffee grounds, is disposed from the brewing unit 5 just as in a conventional automatic coffee machine.

Based on the general concepts outlined before, the following figures will illustrate more detailed embodiments and highlight specific aspects.

Fig. 3 shows an embodiment, wherein the grinder 4 is further configured as the mixer 8 for mixing coffee grind and additive. The shown entity comprises a container 2 for coffee beans and an additive container 6. In this case the additive is provided in the form of a solid bentonite bar 33. The grinder 4 in this example is arranged at the bottom of the coffee container 2. The coffee beans are provided to the grinder 4 by gravity. Also the bentonite bar 33 can be provided to the grinder 4 by gravity. Alternatively, the additive could for example be provided as pills in a stack. Advantageously, an actuator, in particular a mechanical or electromechanical actuator is configured to push the bentonite bar towards the grinder in case that coffee brew with reduced caffeine content is desired, or, alternatively, prevent the bentonite bar 33 from being in contact with the grinder 4 if regular coffee brew is desired.

In the example shown in Fig. 3, the additive container 6 is arranged inside the coffee container 2. However, alternative configurations, for example providing the bentonite bar 33 to the grinder 4 from a side, as for example shown in Fig. 2A, are within in the scope of this aspect of the present invention.

The grinder 4 in this embodiment comprises a grinder body 34 and a recess 35, where a rotating scraper 36 is arranged. The rotating scraper 36 is connected to a motor by a drive shaft 37. The rotating scraper 36 gradually mills down the coffee beans as well as the bentonite bar 33 if coffee with reduced caffeine content is desired. This type of grinder 4 is also referred to as a miller.

In other words the concept shown in Fig. 3 uses a solid bar of bentonite. A desired amount of bentonite is milled down in the miller according to the amount of bentonite that is needed to reduce the caffeine content of the coffee brew to a desired level. The bar is milled together with the coffee beans, which has the effect that the bentonite is already mixed with the coffee grind during the process. A dosing mechanism can define the amount of bentonite that is pushed into the grinder. In other words, the coffee machine comprises a dosing mechanism configured to bring the bentonite bar in contact with the grinder to mill a specific part off the bar.

Referring to the block diagram of Fig. 1, the dosing unit 3 and the mixing unit 8 are not implemented as separate dedicated components but as one unit. The coffee beans from the coffee container 2 to the grinder 4 are supplied by gravity. The amount of coffee grind is controlled by the time that the grinder 4 is in operation. Thus, in the example shown in Fig. 3, the coffee outlet 9 of the coffee container 2 is directly connected to the coffee inlet 14 of the mixing unit 8, wherein the grinder 4 is configured as the mixer 8. Furthermore, the additive dosing unit 7 is implemented as a dosing mechanism that defines the amount of bentonite that is pushed into the grinder 4. Thus, the grinder 4 further comprises the additive inlet 18 of the mixer 8. The grinder 4 as the mixer 8 further comprises the mixing unit outlet 21 for providing the mixture of coffee grind and additive to the brewing unit 5. Since the outlet 21 for providing the mixture of coffee grind and additive is arranged at a bottom side of the grinder 4, it cannot be seen in the perspective view of Fig. 3.

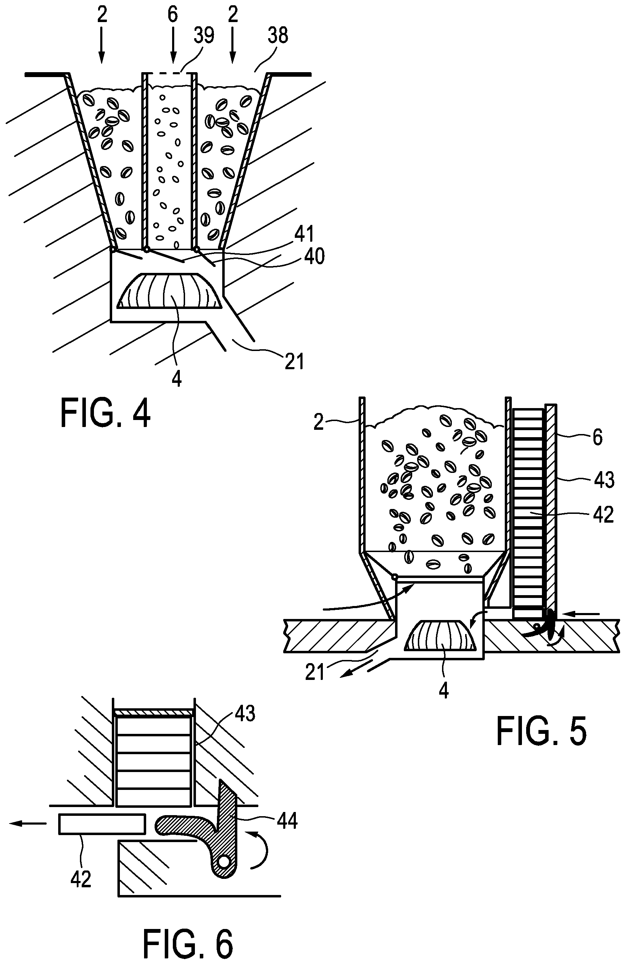

Fig. 4 shows an alternative embodiment of the entity shown in Fig. 3. The embodiment of Fig. 4 comprises a burr grinder 4. Also in this embodiment the grinder 4 is configured as the mixer 8 for mixing coffee grind and additive. The container 2 for coffee beans is arranged above the burr grinder, such that the coffee beans are provided to the burr grinder by gravity without a need for further transportation means. Correspondingly, the additive container 6 for adsorbent is also arranged above the grinder 4. In this embodiment, the caffeine-reducing additive is again bentonite, which is provided in the form of flakes or grains. Optionally, the size and shape corresponds to that of coffee beans since the burr grinder is adapted for grinding coffee beans. The additive container 6 can be an integral part of the coffee machine or alternatively be provided as a replaceable cartridge. In order to avoid that the user confuses the opening 38 for supplying coffee beans and the opening 39 for supplying the caffeine-reducing additive, the usage for replaceable cartridge can be a preferred option. Alternatively, an optional mesh structure can be provided at the opening 39, wherein the openings of the mesh structure are sized to retain coffee beans and to pass grains of caffeine-reducing additive having a smaller size than coffee beans. Proper tagging of the openings 38 and 39 also helps to avoid confusion about which hole is meant for what.

In this embodiment, the dosing units for coffee beans and bentonite grains respectively are implemented as flaps 40, 41. As a first option, the flaps are controlled simultaneously, in order to provide simultaneous flows of coffee beans and bentonite grains towards the grinder 4. The grinder thus produces a homogeneous mixture of coffee grind and caffeine-reducing additive. The mixture of coffee grind and additive is provided at a mixer outlet 21 that passes the mixture of coffee grind and additive on to the brewing unit. As an alternative, the dosing unit 40 for coffee beans and the dosing unit 41 for caffeine-reducing additive are controlled independently. Thereby, an inhomogeneous mixture of coffee grind and additive can be provided. The advantages of such a mixture will be elaborated on further below. Optionally first a coffee grind layer and then a mixed layer comprising coffee grind and additive is provided.

Alternatively the coffee machine further comprises a spindle (not shown) to transport the additive to the grinder by rotating it. Preferably the grinder and spindle are operated by a single common motor.

Fig. 5 shows a further embodiment of the entity of Fig. 3. This embodiment uses a conventional coffee container 2 and dosing unit 3 for dosing coffee. The additive container 6 is implemented as a stack of pellets or pills containing the caffeine-reducing additive. According to this concept, bentonite pills can be provided to the grinder 4, piece by piece, depending on how much additive is desired. The pill or pills and coffee beans are added to the grinder together such that a homogenous mix can be created.

Fig. 6 shows a magnification of the dosing mechanism for the pills 42 of caffeine-reducing additive. In this embodiment, the pills 42 are stacked in a tube 43. The tube 43 can be an integral part of the coffee machine or alternatively a replaceable cartridge. The pill 42 at the end of the tube can be kicked out of the stack 43 for example by a 'hammer' or lever 44. This embodiment is well suited for a low-cost implementation since the lever can be operated manually and does not require additional electro-mechanical components.

In an embodiment, the individual pellets or pills 42 comprising the caffeine-reducing additive are configured with a specific size and composition to decaffeinate, for example, one cup of coffee. Alternatively, a lower amount of caffeine-reducing additive can be comprised within each pellet, such that the number of pellets determines the caffeine content of the coffee brew with reduced caffeine content.

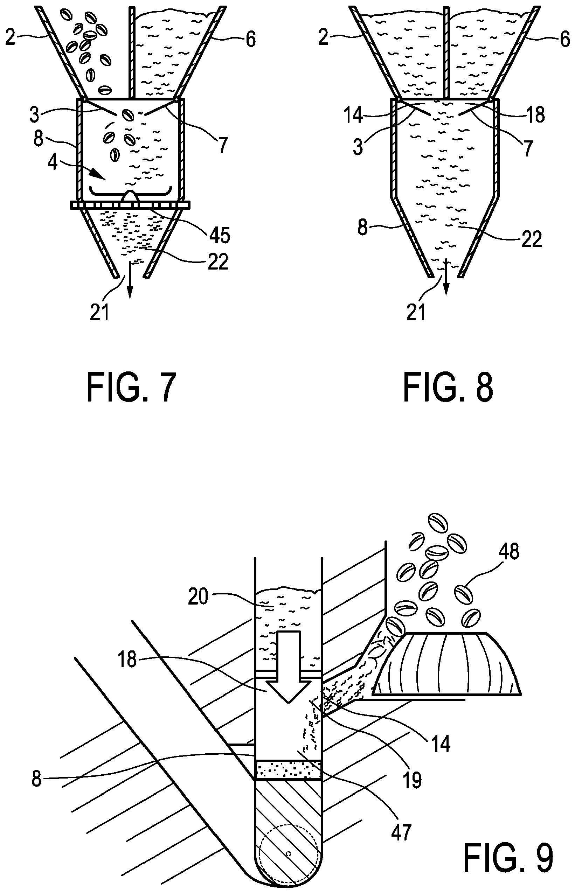

Yet another exemplary embodiment of the respective entity of Fig. 3 is shown in Fig. 7. This embodiment comprises a coffee container 2, an additive container 6, a coffee dosing unit 3 in the form of a flap, an additive dosing unit 7 in the form of a flap and a mixing unit 8 and a grinder 4 in the form of a blade grinder. The coffee is provided in the form of coffee beans. When the flap of the coffee dosing unit 3 is opened, the coffee beans fall down onto the blade grinder 4 by gravity. Correspondingly, the additive in the additive container 6 is provided in the form of grains or powder. When the flap of the dosing unit 7 opens, the additive falls down onto the blade grinder 4 by gravity. In this embodiment, the mixing is not only effected by the grinder, but also in that the two streams of coffee and additive mix in passing since they are leaving the respective containers through adjacent openings. Nonetheless, the blade grinder further supports the mixing of coffee grind and additive. The blade grinder 4 further comprises a sieve 45 underneath the blades 46 of the grinder 4. Thus only particles having a size smaller than the openings of the sieve 46 can pass towards the mixing unit outlet 21 for providing the mixture 22 of coffee grind and additive to the brewing unit.

In other words, this concept uses a blade grinder 4 to grind the coffee beans while at the same time mixing the coffee with the additive. The additive and coffee beans are first added to the grinder with the right dosing, which is controlled by the coffee dosing unit 3 and the additive dosing unit 7. Both ingredients are then ground after which the whole mixture is provided to the brewing unit. This last step can be optionally achieved using a valve, that lets the mixture through after a certain period of grinding, or a sieve, that only lets a small grind through, or a tumbling mechanism, that turns the container upside down.

Fig. 8 shows a modification of the embodiment shown in Fig. 7. In this embodiment, the additive inlet 18 of the mixer 8 is arranged at the coffee grind inlet 14 of the mixer 8. Additive from the additive container 6 and coffee grind from the coffee container 2 are supplied to the mixer 8 by gravity without the need of further supply means. The flaps 3,7 open simultaneously and release a stream of coffee grind and a stream of additive powder. The additive and the coffee grind mix as they are falling down towards the mixer outlet 21.

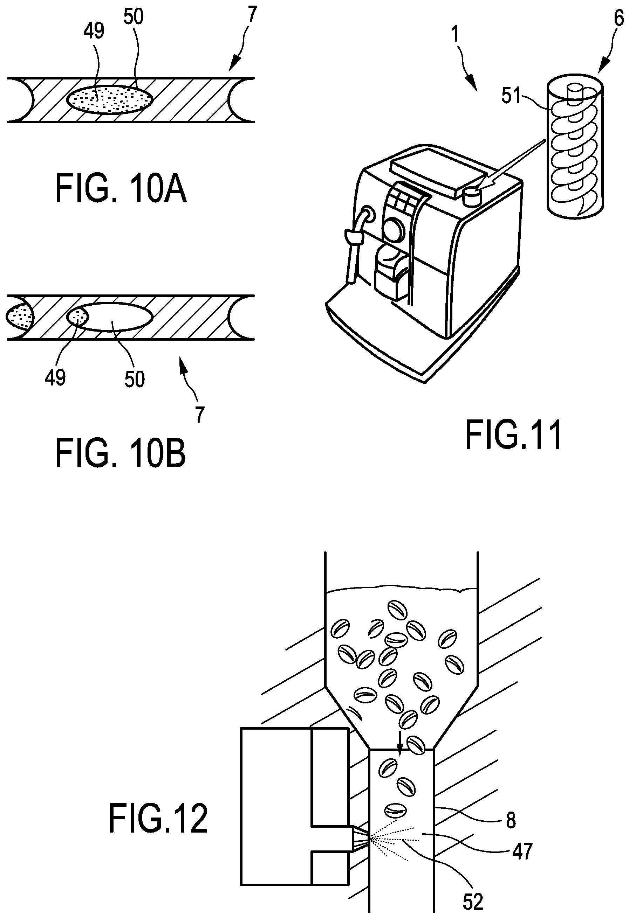

Yet another embodiment of a mixer for mixing coffee grind 19 and caffeine-reducing additive 20 is shown in Fig. 9. In this embodiment, the mixer 8 comprises a mixing chamber 47 having a coffee inlet 14 that is arranged at a side of the mixing chamber 47 and an additive inlet 18 arranged on top of the mixing chamber 47. Alternatively, the positions can be interchanged. This embodiment corresponds to the block diagram shown in Fig. 1. Coffee is provided in the form of coffee beans 48 that are ground by grinder 4 and provided as coffee grind 19 to the mixing chamber 47. Simultaneously, the caffeine-reducing additive 20 enters the mixing chamber 47 from the top. The dosing of the coffee can be effected by the grinder 4. Thus coffee grind 19 is only provided if the grinder 4 is in operation. An exemplary additive dosing unit 7 is shown in Figs. 10A and 10B.

Figs. 10A and 10B show a dosing unit 7 that is implemented as a shutter mechanism, wherein a shutter 49 can slide to open or to close an aperture 50. Fig. 10A shows the shutter in closed state, whereas Fig. 10B shows the shutter in opened state. Intermediate states are possible for a reduced aperture. It should be noted, that a similar concept of dosing unit 7 can also be used for bentonite being available in solid form, for example a solid bar of bentonite. In the case of a solid bar, the shutter 49 can be implemented as a knife, such that the combination of knife 49 and aperture 50 can be used to cut off a specific amount of bentonite from the solid bar similar to a cigar cutter. As soon as the user selects a coffee with reduced caffeine content, the shutter opens and lets the defined portion of the bentonite bar through. The cutter closes again and thereby cuts of piece of bentonite. At the same time the shutter 49 shuts off the rest of the bentonite bar from the grinding process. In this embodiment, the cut-off piece is milled together with the coffee beans. Obviously, the use of a bentonite bar and the mechanism of Figs. 10A and 10B as a cutter mechanism is only feasible in combination with a grinder. Optionally, the cutter supports the grinding process by the cutting of multiple smaller slices from the bentonite bar instead of one large chunk, such that the grinding process only has to deal with smaller pieces of bentonite.

Fig. 11 shows a further approach for dosing the amount of caffeine-reducing additive with a spindle 51. Optionally, the spindle is part of a replaceable cartridge as the additive container 6. The amount of caffeine-reducing additive can be controlled by a rotatory movement of the spindle 51 within the cartridge. Alternatively, the spindle 51 can be an integral part of an additive container of the coffee machine 1.

In other words, the concept uses a spindle 51 to transport a specific amount of caffeine-reducing additive towards the mixer, where it mixes with the coffee grind. In this embodiment, the size of the additive particles can affect the working principle of the spindle and the decaffeination principle. If larger particles are used, the additive also has to go through a grinder.

The proposed solution of having a replaceable cartridge at the additive container 6 is very convenient for the user, since the user only has to replace the entire cylinder or cartridge. Thus, no separate cleaning process of the spindle 51 is required. In an alternative embodiment, a spindle can be used as a mixer 8 for mixing coffee grind and caffeine-reducing additive.

Fig. 12 shows a further alternative for the mixing process. In this embodiment, the caffeine-reducing additive 20 is sprayed into a stream of either coffee beans or coffee grind in a mixing chamber 47 of the mixer 8. The spray 52 can be a powder spray of caffeine-reducing additive or alternatively a liquid spray, wherein the caffeine-reducing additive is provided in liquid form.

Again, the spray could be provided before the brewing unit or alternatively before the grinder. In other words, this concept uses a spray to mix the caffeine-reducing additive and the coffee. Optionally, the additive is dissolved in water, which is pumped to form a spray of additive. This spray can be placed before the grinder to spray the beans or could alternatively be placed after the grinder to spray the coffee grind. The latter also applies if no grinder is applied.

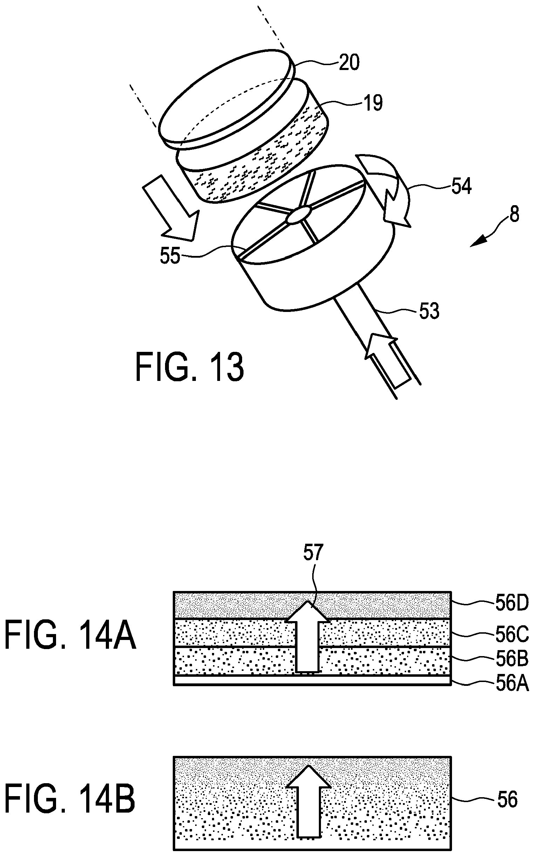

Fig. 13 shows an alternative embodiment of a mixer 8 for mixing coffee grind 19 and caffeine-reducing additive 20. An advantage of this embodiment is that the coffee grind 19 and the caffeine-reducing additive 20 can be mixed directly in the brewing unit 5. In an exemplary embodiment, an infuser 53 achieves the mixing of coffee grind and additive. An infuser is already known from conventional coffee machines, wherein the infuser is used for compressing the coffee grind to form a coffee puck, thus a briquette of compressed coffee grind, which is then used for brewing. From a practical point of view, the coffee puck is the portion of compressed coffee that can be eventually found in a waste container of the coffee machine. In contrast to the prior art, the infuser 53 as shown here is configured to perform a rotatory movement 54 for mixing coffee grind 19 and caffeine-reducing additive 20. Optionally, the infuser further comprises one or more ribs 55 for engaging with the coffee grind and the additive.

A homogeneous mixture of coffee grind and caffeine-reducing additive can be used for providing coffee brew with reduced caffeine content. However, the inventors have found that advantageously, a variable mixing ratio of coffee grind and additive is employed.

Fig. 14A show a cross section of a coffee puck, wherein the concentration of the caffeine-reducing additive within the coffee puck increases from bottom to top. Thus the layers 56A, 56B, 56C, 56D shown an increasing concentration of the caffeine-reducing additive. The arrow 57 indicates a direction of the flow of coffee brew.

Fig. 14B shows an alternative embodiment, wherein the mixing ratio of additive and coffee grind gradually increases in the coffee puck 56 from bottom to top in the direction 57 of the coffee flow. As an alternative, non-monotonous concentration gradients can be used.

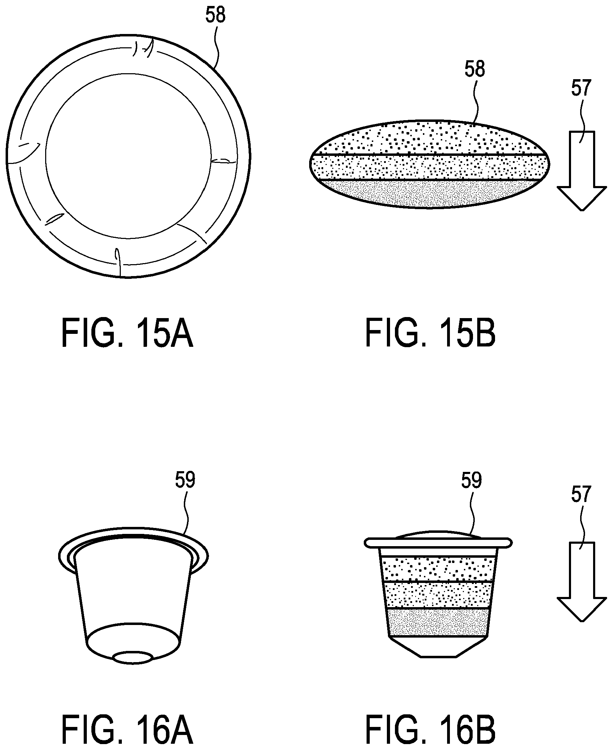

Further, a coffee pad 58 comprising a non-homogeneous mixture of coffee grind and caffeine-reducing additive is disclosed (Figs. 15A, 15B). Alternatively, a coffee capsule 59 comprising a non-homogeneous mixture of coffee grind and caffeine-reducing additive is disclosed (Figs. 16A, 16B). Furthermore, a coffee container comprising a mixture of coffee grind and caffeine-reducing additive is disclosed. Advantageously the mixture is a non-homogeneous mixture of coffee grind and caffeine-reducing additive.

The use of coffee pads and/or coffee capsules comprising pre-decaffeinated coffee powder is known in the art. The mixing of regular coffee grind and caffeine-reducing additive offers an alternative solution for providing coffee brew with reduced caffeine content. In particular, pre-decaffeinated coffee is only available for a limited set of coffee flavors. The use of a caffeine-reducing additive in coffee pads or coffee capsules, according to this aspect of the invention, enables the use of any desired type of regular coffee for providing coffee brew with reduced caffeine content. The combination of caffeine-reducing additive and regular coffee can have a positive effect on the taste and/or shelf life. Advantageously, the mixing ratio of additive powder and coffee grind ranges between 0.01 and 1, preferably between 0.01 and 0.5, wherein the mixing ratio defines a ratio of the weight of the additive and the weight of the coffee.

Fig. 15B shows a cross section through the coffee pad 58. Fig. 16B shows a cross section 16B through the coffee capsule 59. In the shown embodiments, the coffee pad and coffee capsule feature a concentration gradient, wherein the concentration of the additive in the mixture of coffee grind and additive increases in a direction 57, which indicates the downstream direction towards an outlet for providing the coffee brew.

An exemplary coffee pad 58 for a single espresso serving contains a mixture of 3 to 14 grams of ground roast coffee powder and 0.1 to 14 grams of additive powder.

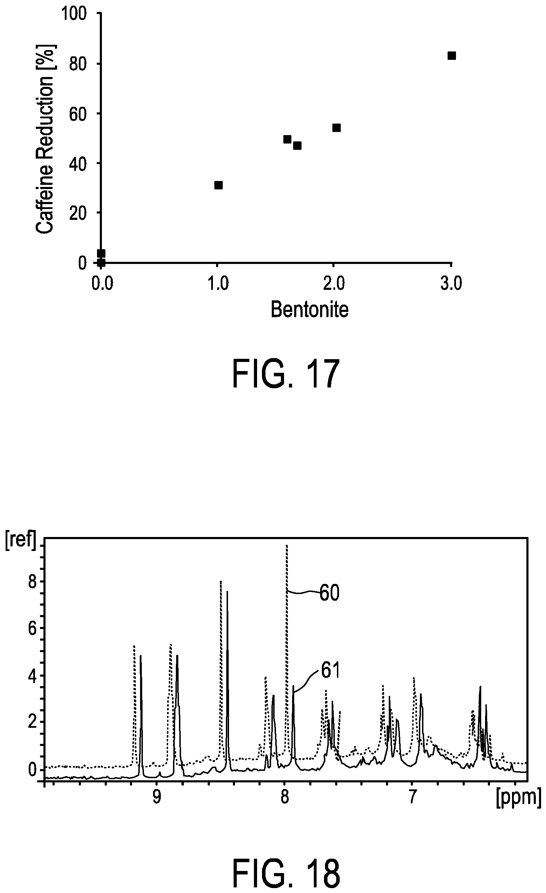

Figs. 17 and 18 illustrate experimental results regarding the decaffeination of coffee using bentonite as an exemplary caffeine-reducing additive.

Fig. 17 shows an amount of bentonite on the horizontal axis and the percentage of caffeine reduction on the vertical axis, wherein 0% indicates no caffeine reduction and 100% indicates full decaffeination. It has been shown, that the coffee machine 1 according to the present invention is capable of reducing the caffeine content of the coffee brew within a wide range. Advantageously, also intermediate values of caffeine-reduction can be achieved by configuring the same coffee machine to provide different amounts of caffeine-reducing additive. Thus the level of caffeine reduction can be adjusted just as the user likes.

Fig. 18 illustrates the spectra of regular coffee brew 60 and coffee brew 61 prepared using a mixture of coffee grind and caffeine-reducing additive. The curves are obtained using 1H-NMR spectroscopy. The curve 61 shows a significant reduction of the spectral peak corresponding to caffeine compared to curve 60. The curve 60 is moved slightly to the upper left direction in order to better show the differences. The analysis further shows that most of the common coffee constituents other than caffeine are unaffected by the Bentonite treatment.

Ideally, one would like to combine the known milling properties of the coffee beans and the presence of additives / bentonite to create one's own personal coffee. Preferably a handheld device, such as a smart phone, is used to read a code of the coffee beans package. Next this is correlated with the known grinding properties of the type of beans beans in a database. Finally this information is sent with the handheld device to the coffee machine via a remote connection, such as Wi-Fi or Bluetooth and the brewing of a caffeine reduced coffee is started. The level of caffeine reduction can be set by the handheld device or is selected at the coffee machine's UI. The preferred settings or recipes can be shared with others on Internet.

In conclusion, a coffee machine for providing coffee brew with reduced caffeine content has been presented, wherein the quality of the coffee is improved. Furthermore, the coffee brew with reduced caffeine content can be provided based on regular coffee beans and thus eliminates the need for additional decaffeinated coffee beans.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

Any reference signs in the claims should not be construed as limiting the scope.

## Claims

1. A coffee machine (1) configured for providing coffee brew with reduced caffeine content comprising
- a mixer (8) configured for mixing coffee grind (19) and a caffeine-reducing additive (20), the mixer having a coffee inlet (14) for receiving the coffee grind (19), an additive inlet (18) for receiving the caffeine-reducing additive (20), and a mixer outlet (21) for providing a mixture (22) of coffee grind and additive, and
- a brewing unit (5) configured for brewing the mixture (22) of coffee grind and additive, the brewing unit (5) having a brewing unit inlet (23) and a brewing unit outlet (24) for providing coffee brew, wherein the brewing unit inlet (23) of the brewing unit (5) is connected to the mixer outlet (21) of the mixer (8) for receiving the mixture (22) of coffee grind and additive, the coffee machine being **characterized by** further comprising:
- a grinder (4) configured for grinding coffee beans and/or the additive, wherein the grinder (4) is further configured as the mixer (8) for mixing coffee grind (19) and additive (20).

2. The coffee machine according to claim 1,
wherein the caffeine-reducing additive is a caffeine adsorbent, in particular an alumino-silicate, a smectite alumino silicate, or bentonite.

3. The coffee machine according to claim 1,
wherein the grinder (4) is arranged to reduce the grinding cycletime with increasing content of additive (20) in the mixture (22).

4. The coffee machine according to claim 3,
further comprising a spindle to transport the additive (20) to the grinder (4), wherein the grinder and spindle are driven by a common motor.

5. The coffee machine according to claim 1,
further configured to receive the caffeine-reducing additive in the form of one of powder, flakes, slurry, grains, pellets (42), and a solid bar (33).

6. The coffee machine according to claim 1,
wherein the additive comprises particles of less than 100 µm diameter, in particular less than 10 µm diameter.

7. The coffee machine according to claim 1,
further comprising an additive container (6) for poviding the caffeine-reducing additive at an additive outlet (15),
wherein additive outlet (15) of the additive container (6) is connected to the additive inlet (18) of the mixer (8).

8. The coffee machine according to claim 1,
further configured to receive an additive container (6) for providing the caffeine-reducing additive at an additive outlet (15),
wherein the additive inlet (18) of the mixer (8) is connectable to the additive outlet (15) of the additive container (6).

9. The coffee machine according to claim 7 or 8,
further comprising additive supply means for supplying the additive from the additive container (6) at the additive inlet (18) of the mixer (8).

10. The coffee machine according to claim 1,
wherein the additive inlet (18) of the mixer (8) is arranged at or below the coffee grind inlet (14) of the mixer (8).

11. The coffee machine according to claim 1,
further comprising a coffee dosing unit (3) and/or an additive dosing unit (7).

12. The coffee machine according to claim 1,
wherein the mixer (8) is configured to provide a mixture of coffee grind (19) and additive (20) having a variable mixing ratio of coffee grind (19) and additive (20).

13. A method for providing coffee brew with reduced caffeine content comprising the steps of:
- mixing coffee grind and a caffeine-reducing additive in a mixer (8) of a coffee machine (1), and
- brewing the mixture (22) of coffee grind and caffeine-reducing additive.

## Patentansprüche

1. Kaffeemaschine (1), die konfiguriert ist, um Kaffeebrühe mit reduziertem Koffeingehalt bereitzustellen, die Folgendes umfasst
- eine Mischvorrichtung (8), die konfiguriert ist, um Kaffeemahlgut (19) und einen Koffein reduzierenden Zusatzstoff (20) zu mischen, wobei die Mischvorrichtung einen Kaffeeeinlass (14) zum Empfangen des Kaffeemahlguts (19), einen Zusatzstoffeinlass (18) zum Empfangen des Koffein reduzierenden Zusatzstoffs (20) und einen Mischvorrichtungsauslass (21) zum Bereitstellen einer Mischung (22) aus Kaffeemahlgut und Zusatzstoff aufweist, und
- eine Brüheinheit (5), die konfiguriert ist, um die Mischung (22) aus Kaffeemahlgut und Zusatzstoff zu brühen, wobei die Brüheinheit (5) einen Brüheinheitseinlass (23) und einen Brüheinheitsauslass (24) zum Bereitstellen von Kaffeebrühe aufweist, wobei der Brüheinheitseinlass (23) der Brüheinheit (5) mit dem Mischvorrichtungsauslass (21) der Mischvorrichtung (8) verbunden ist, um die Mischung (22) aus Kaffeemahlgut und Zusatzstoff zu empfangen, wobei die Kaffeemaschine **dadurch gekennzeichnet ist, dass** sie weiter Folgendes umfasst:
- eine Mühle (4), die konfiguriert ist, um Kaffeebohnen und/oder den Zusatzstoff zu mahlen, wobei die Mühle (4) weiter als die Mischvorrichtung (8) zum Mischen von Kaffeemahlgut (19) und Zusatzstoff (20) konfiguriert ist.

2. Kaffeemaschine nach Anspruch 1,
wobei der Koffein reduzierende Zusatzstoff ein Koffeinadsorptionsmittel ist, insbesondere ein Aluminiumsilikat, ein Smektitaluminiumsilikat oder Bentonit.

3. Kaffeemaschine nach Anspruch 1,
wobei die Mühle (4) eingerichtet ist, um die Mahlzykluszeit mit steigendem Gehalt an Zusatzstoff (20) in der Mischung (22) zu reduzieren.

4. Kaffeemaschine nach Anspruch 3,
die weiter eine Spindel zum Transportieren des Zusatzstoffs (20) zu der Mühle (4) umfasst, wobei die Mühle und die Spindel von einem gemeinsamen Motor angetrieben werden.

5. Kaffeemaschine nach Anspruch 1,
die weiter konfiguriert ist, um den Koffein reduzierenden Zusatzstoff in der Form eines von Pulver, Flocken, Slurry, Körnern, Pellets (42) und einer massiven Stange (33) zu empfangen.

6. Kaffeemaschine nach Anspruch 1,
wobei der Zusatzstoff Teilchen mit weniger als 100 µm Durchmesser, insbesondere weniger als 10 µm Durchmesser umfasst.

7. Kaffeemaschine nach Anspruch 1,
die weiter einen Zusatzstoffbehälter (6) zum Bereitstellen des Koffein reduzierenden Zusatzstoffs an einem Zusatzstoffauslass (15) umfasst,
wobei der Zusatzstoffauslass (15) des Zusatzstoffbehälters (6) mit dem Zusatzstoffeinlass (18) der Mischvorrichtung (8) verbunden ist.

8. Kaffeemaschine nach Anspruch 1,
die weiter konfiguriert ist, um einen Zusatzstoffbehälter (6) zum Bereitstellen des Koffein reduzierenden Zusatzstoffs an einem Zusatzstoffauslass (15) bereitzustellen,
wobei der Zusatzstoffeinlass (18) der Mischvorrichtung (8) mit dem Zusatzstoffauslass (15) des Zusatzstoffbehälters (6) verbindbar ist.

9. Kaffeemaschine nach Anspruch 7 oder 8,
die weiter ein Zusatzstoffzufuhrmittel zum Zuführen des Zusatzstoffs von dem Zusatzstoffbehälter (6) an dem Zusatzstoffeinlass (18) der Mischvorrichtung (8) umfasst.

10. Kaffeemaschine nach Anspruch 1,
wobei der Zusatzstoffeinlass (18) der Mischvorrichtung (8) an oder unter dem Kaffeemahlguteinlass (14) der Mischvorrichtung (8) eingerichtet ist.

11. Kaffeemaschine nach Anspruch 1,
die weiter eine Kaffeedosierungseinheit (3) und/oder eine Zusatzstoffdosierungseinheit (7) umfasst.

12. Kaffeemaschine nach Anspruch 1,
wobei die Mischvorrichtung (8) konfiguriert ist, um eine Mischung aus Kaffeemahlgut (19) und Zusatzstoff (20) bereitzustellen, die ein variables Mischverhältnis des Kaffeemahlguts (19) und des Zusatzstoffs (20) aufweist.

13. Verfahren zum Bereitstellen von Kaffeebrühe mit reduziertem Koffeingehalt, das die folgenden Schritte umfasst:
- Mischen von Kaffeemahlgut und einem Koffein reduzierenden Zusatzstoff in einer Mischvorrichtung (8) einer Kaffeemaschine (1), und
- Brühen der Mischung (22) aus Kaffeemahlgut und Koffein reduzierendem Zusatzstoff.

## Revendications

1. Machine à café (1) configurée pour fournir une infusion de café présentant une teneur réduite en caféine comprenant
- un mélangeur (8) configuré pour mélanger du café moulu (19) à un additif de réduction de caféine (20), le mélangeur étant muni d'une entrée de café (14) pour recevoir le café moulu (19), d'une entrée d'additif (18) pour recevoir l'additif de réduction de caféine (20) et d'une sortie de mélangeur (21) pour réaliser un mélange (22) de café moulu et d'additif, et
- une unité d'infusion (5) configurée pour infuser le mélange (22) de café moulu et d'additif, l'unité d'infusion (5) étant munie d'une entrée d'unité d'infusion (23) et d'une sortie d'unité d'infusion (24) pour fournir une infusion de café, dans laquelle l'entrée d'unité d'infusion (23) de l'unité d'infusion (5) est raccordée à la sortie de mélangeur (21) du mélangeur (8) pour recevoir le mélange (22) de café moulu et d'additif, la machine à café étant **caractérisée en ce qu'**elle comprend en outre :
- un moulin (4) configuré pour moudre des grains de café et/ou l'additif, dans laquelle le moulin (4) est configuré en outre comme le mélangeur (8) pour mélanger du café moulu (19) et l'additif (20).

2. Machine à café selon la revendication 1, dans laquelle l'additif de réduction de caféine est un agent d'adsorption de la caféine, en particulier un aluminosilicate, un aluminosilicate de smectite ou bentonite.

3. Machine à café selon la revendication 1, dans laquelle le moulin (4) est agencé pour réduire le temps de cycle de broyage en augmentant la teneur d'additif (20) dans le mélange (22).

4. Machine à café selon la revendication 3, comprenant en outre une tige pour transporter l'additif (20) vers le moulin (4), dans laquelle le moulin et la tige sont entraînés par un moteur commun.

5. Machine à café selon la revendication 1, configurée en outre pour recevoir l'additif de réduction de caféine sous forme de poudre, flocons, pâte, grains, granulés (42), et d'une barre solide (33).

6. Machine à café selon la revendication 1, dans laquelle l'additif comprend des particules dont le diamètre est inférieur à 100 µm, en particulier dont le diamètre est inférieur à 10 µm.

7. Machine à café selon la revendication 1, comprenant en outre un récipient d'additif (6) pour fournir l'additif de réduction de caféine au niveau d'une sortie d'additif (15),
dans laquelle la sortie d'additif (15) du récipient d'additif (6) est raccordée à la sortie d'additif (18) du mélangeur (8).

8. Machine à café selon la revendication 1, configurée en outre pour recevoir un récipient d'additif (6) pour fournir l'additif de réduction de caféine au niveau d'une sortie d'additif (15),
dans laquelle l'entrée d'additif (18) du mélangeur (8) peut être raccordée à la sortie d'additif (15) du récipient d'additif (6).

9. Machine à café selon la revendication 7 ou 8, comprenant en outre un moyen d'alimentation en additif pour alimenter l'additif du récipient d'additif (6) au niveau de l'entrée d'additif (18) du mélangeur (8).

10. Machine à café selon la revendication 1, dans laquelle l'entrée d'additif (18) du mélangeur (8) est agencée au niveau de ou en dessous de l'entrée de café moulu (14) du mélangeur (8).

11. Machine à café selon la revendication 1, comprenant en outre une unité de dosage de café (3) et/ou une unité de dosage d'additif (7).

12. Machine à café selon la revendication 1, dans laquelle le mélangeur (8) est configuré pour fournir un mélange de café moulu (19) et d'additif (20) présentant un rapport de mélange variable de café moulu (19) et d'additif (20).

13. Procédé destiné à fournir une infusion de café présentant une teneur réduite en caféine comprenant les étapes consistant à :
- mélanger le café moulu à un additif de réduction de caféine dans un mélangeur (8) d'une machine à café (1), et
- infuser le mélange (22) de café moulu et d'additif de réduction de caféine.
